# EUROPÄISCHE PATENTSCHRIFT

(11) **EP 1 895 102 B1**
(45) Veröffentlichungstag und Bekanntmachung des Hinweises auf die Patenterteilung: **22.04.2009**
(21) Anmeldenummer: 06017532.0
(22) Anmeldetag: 23.08.2006
(51) Int. Cl.: F01D 5/28, F01D 5/18

(54) **Beschichtete Turbinenschaufel**
Coated turbine blade
Aube de turbine revêtu

(43) Veröffentlichungstag der Anmeldung: 05.03.2008
(73) Patentinhaber: SIEMENS AKTIENGESELLSCHAFT, 80333 München (DE)
(72) Erfinder: Ahmad, Fathi, 41564 Kaarst (DE); Dankert, Michael, 63069 Offenbach (DE)

(56) Entgegenhaltungen:
- EP-A- 0 139 396
- WO-A-00/12868
- WO-A-00/25005

## Beschreibung

Die Erfindung betrifft eine beschichtete Turbinenschaufel gemäß dem Oberbegriff des Anspruchs 1.

Derartige Turbinenschaufeln sind allgemein bekannt z.B offenbart EP 0139396 ein beschichtetes Blatt einer Gasturbine mit, an verschiedenen Stellen, verchiedener Schutzschicht. Sie weisen ein von einem heißen Arbeitsmedium umströmbares Tragflügelprofil auf, welches sich von einer Anströmkante zu einer Hinterkante erstreckt. Das Tragflügelprofil wird dabei von einer saugseitigen Schaufelwand und einer druckseitigen Schaufelwand gebildet und ist an ihrer äußeren, dem heißen Arbeitsmedium zuwendbaren Oberfläche mit einer Beschichtung versehen. Die Beschichtung dient als Wärmeschutzschicht, um den Wärmeeintrag aus dem heißen Arbeitsmedium in das Material des Tragflügelprofils gering zu halten, damit dieses den mechanischen und thermischen Belastungen für eine vorgegebene Lebensdauer Standhalten kann. Obwohl diese Beschichtung, beispielsweise eine keramische APS-Wärmedämmschicht, das Turbinenschaufelmaterial schützt, können im Schaufelmaterial als Verschleißerscheinungen Risse auftreten, die die Lebensdauer des Bauteils verkürzen und die bei ausbleibenden Gegenmaßnahmen den Betrieb der Gasturbine gefährden können.

Aufgabe der Erfindung ist daher die Bereitstellung einer gattungsgemäßen Turbinenschaufel, deren Lebensdauer und deren Verschleißverhalten weiter verbessert ist.

Die der Erfindung zugrunde liegende Aufgabe wird durch eine dem Oberbegriff des Anspruchs 1 entsprechende Turbinenschaufel gelöst, welche mit den im kennzeichnenden Teil des Anspruchs 1 beschriebenen Merkmalen ausgestattet ist.

Der Erfindung liegt die Erkenntnis zugrunde, dass bei der gattungsgemäßen Turbinenschaufel, welche im Inneren von einem Kühlmittel durchströmbar sein kann, entlang der Schaufelwände des Tragflügelprofils - von der Anströmkante zur Hinterkante betrachtet - hohe Materialtemperaturen auftreten, wogegen sich in den im Inneren des Tragflügelprofils vorhandenen Rippen, welche zur Abstützung der beiden Schaufelwände dienen, wesentliche geringere Materialtemperaturen beim Betrieb einstellen. Aufgrund dieser Einflüsse treffen im Verbindungsbereich der ineinander übergehenden Rippen und Schaufelwände große Temperaturdifferenzen aufeinander, die an dieser Stelle zu Rissen führen können. Um diese besonders hohen Temperaturgradienten zu vermeiden, schlägt die Erfindung vor, dass die Beschichtung in mindestens einem der Bereiche der äußeren Oberfläche, die jedem der Verbindungsbereiche gegenüberliegt, eine größere Schichtdicke aufweist als die anderen Bereiche der äußeren Oberfläche der Schaufelwände, welche Schaufelwände im Inneren einen Holraum begrenzen. An den Stellen mit dickerer Beschichtung findet dann nur ein geringerer Wärmeeintrag statt. Dies führt zu einer Vergleichmäßigung der Materialtemperatur und zu einer Verringerung der Temperaturgradienten im Verbindungsbereich, wodurch geringere temperaturbedingte Spannungen im Material auftreten. Es kann eine erhöhte Lebensdauer der Turbinenschaufel erreicht werden, da Risse im Verbindungsbereich seltener auftreten bzw. deren Wachstum nur verzögert stattfindet.

Aufgrund der lokal dickeren Beschichtung, insbesondere einer dickeren keramischen Wärmedämmschicht, kann so eine Vergleichmäßigung der Materialtemperaturen in jedem erfindungsgemäß ausgebildetem Verbindungsbereich erreicht werden, was sich auf die Lebensdauer der Turbinenschaufel verlängernd auswirkt. Die Turbinenschaufel kann dabei als Leitschaufel oder als Laufschaufel ausgebildet sein.

Weitere vorteilhafte Ausgestaltungen der Erfindung sind in den Unteransprüchen angegeben.

Die Erfindung ist insbesondere dann von besonderer Wirkung, wenn im Inneren des Tragflügelprofils ein Kühlmittel strömbar ist. In diesem Fall wird die Stützrippe ggf. sogar beidseitig besonders effizient gekühlt, obwohl dies zu weit größeren Temperaturgradienten im Verbindungsbereich führt. Dementsprechend ist die erfindungsgemäße Maßnahme zur Angleichung der Materialtemperaturen und zur Verlängerung der Lebensdauer insbesondere für eine derartige Turbinenschaufel sinnvoll.

Falls die dickere Beschichtung in Form von vergleichsweise kleinen Erhebungen aus der dünneren Beschichtung nach außen hervorsteht, könnte sich das daran vorbeiströmende heiße Arbeitsmedium verwirbeln. Diese vernachlässigbare Turbulenz führt jedoch nur zu einer geringfügigen lokalen heißgasseitigen Erhöhung des Wärmeübergangskoeffizienten, die unschädlich für die Turbinenschaufel ist. Da aber üblicherweise aufgrund des Beschichtungsverfahrens eine versatzartige Erhebung der Schichtdicke ohnehin nicht möglich ist, sondern nur eine stetige Zunahme bzw. eine stetige Abnahme der Schichtdicke, hat dies keinen negativen Einfluss auf die Erfindung.

Gemäß einer weiteren Ausgestaltung der Erfindung ist das Tragflügelprofil von einem Grundkörper gebildet, auf dem die Beschichtung aufgebracht ist. Der beispielsweise gegossene Grundkörper weist in den Bereichen, in denen die Beschichtung die größere Schichtdicke aufweisen soll, Vertiefungen auf. Jede Vertiefung ist in bevorzugter Art und Weise derart tief, dass sie annähernd der Differenz zwischen der dickeren und der dünneren Beschichtung entspricht, um so eine besonders aerodynamische und versatzfreie, d.h. glatte, vom Arbeitsmedium umströmbare Oberfläche der Beschichtung zu erzielen. Da die Beschichtung in der Regel eine Schichtdicke von 200 µm bis 600 µm aufweist und der Faktor zwischen dünnerer Beschichtung zu dickerer Beschichtung in der Größenordnung von mindestens 1,1 oder mindestens 1,2 liegt, sind diese Vertiefungen in der Regel nicht tiefer als 120 µm.

In einer besonderen Ausgestaltung der Erfindung laufen die saugseitige Schaufelwand und die druckseitige Schaufelwand im Bereich einer Hinterkante zusammen, wobei die Beschichtung in diesem Bereich dicker ist als im davor unmittelbar stromauf liegenden Bereich. Auch hier grenzen heißere Schaufelwandbereiche an im Inneren kühlere Materialbereiche, so dass die erfindungsgemäße Reduzierung von Materialspannungen auch an dieser Stelle erfolgen kann.

Die Wirkungen der Merkmale der Erfindung werden anhand eines Ausführungsbeispiels näher erläutert. Es zeigen:
- FIG 1: einen Querschnitt durch ein erfindungsgemäßes Schaufelprofil in einer ersten Ausgestaltung und
- FIG 2: einen Querschnitt durch eine alternativ ausgebildetes Schaufelprofil gemäß einer weiteren Ausgestaltung.

Identische Merkmale sind mit den gleichen Bezugszeichen versehen. Soweit nicht explizit darauf hingewiesen wird, führen die identischen Merkmale auch zu identischen Wirkungen.

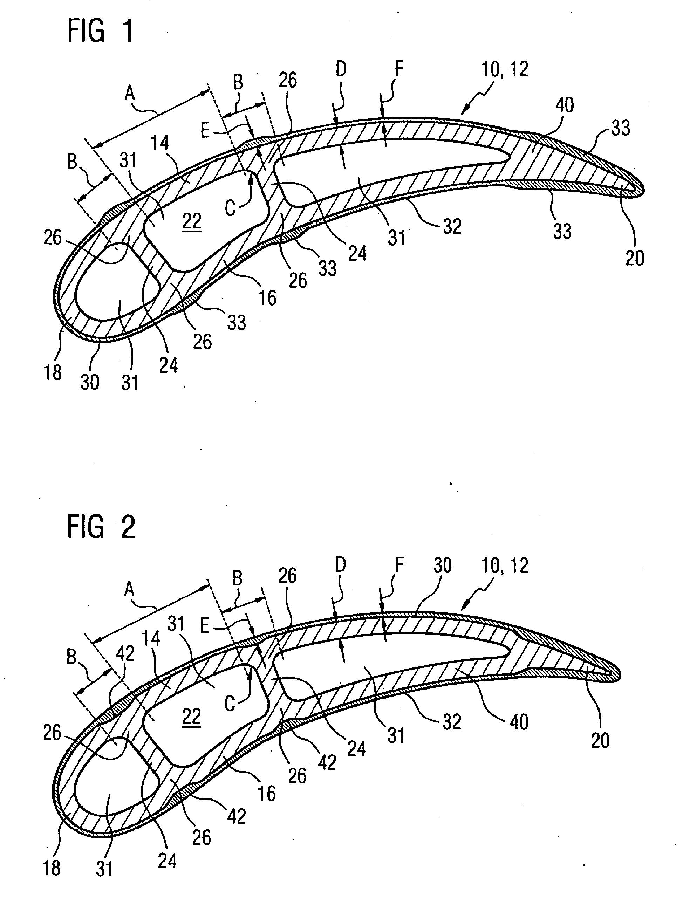

In FIG 1 ist der Querschnitt durch ein Tragflügelprofil 10 einer erfindungsgemäßen Turbinenschaufel 12 gezeigt. Die Turbinenschaufel 12 wird vorzugsweise in einer stationären, axial durchströmten Gasturbine eingesetzt. Sie kann aber auch beispielsweise in Flugzeuggasturbinen Verwendung finden. Das Tragflügelprofil 10 wird von einer saugseitigen Schaufelwand 14 und einer druckseitigen Schaufelwand 16 gebildet, welche sich jeweils von einer Vorderkante 18 zu einer Hinterkante 20 erstrecken. Das Tragflügelprofil 10 weist zudem im Inneren 22 angeordnete Stützrippen 24 auf, welche die druckseitige Schaufelwand 16 mit der saugseitigen Schaufelwand 14 verbinden, wodurch die Steifigkeit des Tragflügelprofils 10 erhöht wird. Jede Stützrippe 24 geht in einem Verbindungsbereich 26 unter Vergrößerung der Wanddicke D der Schaufelwand 14, 16 in diese über. Im Bereich der Hinterkante 20 vereinigen sich die saugseitige Schaufelwand 14 und die druckseitige Schaufelwand 16, so dass in diesem Bereich in Richtung der Hinterkante 20 anfänglich eine besonders große gemeinsame Wanddicke D vorliegt, die mit geringer werdendem Abstand zur Hinterkante 20 kontinuierlich abnimmt.

Die Schaufelwände 14, 16 weisen an ihrer äußeren, einem Arbeitsmedium zugewandten Oberfläche 30 eine Beschichtung 32 auf, welche insbesondere eine keramische Wärmedämmschicht sein kann. Diese kann beispielsweise im APS-Verfahren aufgetragen worden sein. Alternativ dazu kann die Wärmedämmschicht auch im Plasmaspritzverfahren oder in vergleichbaren Methodiken auf dem Grundkörper 40 aufgebracht worden sein. Die Beschichtungen 32 kann zudem auch als Schichtsystem mehrschichtig sein und zusätzlich eine Korrosionsschicht umfassen.

Sowohl die saugseitige Schaufelwand 14 als auch die druckseitige Schaufelwand 16 weisen entlang ihrer Erstreckung von der Vorderkante 18 zu der Hinterkante 20 im Wesentlichen eine gleich bleibende Wanddicke D auf. Die Wanddicke D nimmt jedoch im Verbindungsbereich 26 aufgrund des hohlkehlartigen Überganges zu den Stützrippen 24 hin zu, so dass diese Bereiche B größere Wanddicken aufweisen als die Bereiche A, in denen die im Inneren 22 der Turbinenschaufel 12 vorhandenen Hohlräume 31 angeordnet sind. Zudem sind Massenanhäufungen C am Übergang vorhanden.

In den Bereichen B mit größeren Wanddicken D oder nahe den Verbindungsbereichen 26 ist die Beschichtung 32 dicker aufgebracht als in den Bereichen A, in denen die Schaufelwände 14, 16 der Turbinenschaufel 12 geringere Wanddicken D aufweisen oder in denen die Schaufelwände 14, 16 die inneren Hohlräume 31 begrenzen. So gebildete lokale Beschichtungsanhäufungen 33 stehen geringfügig aus der Oberfläche hervor, indem die Schichtdicke der Beschichtung - entlang des Querschnitts betrachtet - auf das gewünschte, dickere Maß E stetig zunimmt und nach dem Erreichen des Maximums wieder auf das übliche Maß F kontinuierlich abnimmt. Dies ist in FIG 1 schematisch skizziert. Der Faktor von dünnerer Beschichtung zu dickerer Beschichtung liegt in der Größenordnung von mindestens 1,1 oder mindestens 1,2.

Da das von einem Grundkörper 40 gebildete Tragflügelprofil 10 üblicherweise eine gewünschte aerodynamische Profilierung aufweist, entstehen aufgrund der lokalen Schichtdickenveränderung geringfügige Erhebungen 33, deren aerodynamische Einflüsse vernachlässigbar sind.

Abhilfe hierzu zeigt die in FIG 2 im Querschnitt dargestellte Turbinenschaufel 12. Im Bereich 26 der Verbindungen von Stützrippen 24 mit den Schaufelwänden 16, 14 sind sich im Grundkörper 40 über die Höhe des Tragflügelprofils 10 erstreckende Vertiefungen 42 vorgesehen, wodurch eine besonders aerodynamische, weil erhebungsfreie Kontur der beschichteten Turbinenschaufel 12 unter Verwirklichung der erfinderischen Idee erreicht werden kann. Auch werden dadurch Masseanhäufungen in den Verbindungsbereichen 26 reduziert.

Zur Kühlung der Turbinenschaufel 12 kann im Inneren 22 bzw. in den Hohlräumen 31 der Turbinenschaufel 12 ein Kühlmittel strömen, welches unter Nutzung der bekannten Kühlsysteme, wie Konvektionskühlung, Prallkühlung und/oder Filmkühlung, die Temperaturen im Material des Grundkörpers 40 derartig einstellt, dass dieses bei noch höheren Temperaturen des heißen Arbeitsmediums trotzdem eine besonders lange Lebensdauer erreicht.

Aufgrund der doch vergleichsweisen dünnen Beschichtung 32 sind die Vertiefungen 42 in Fig. 2 unverhältnismäßig groß dargestellt. In der Realität liegt die Tiefe dieser Vertiefungen in der Größenordnung von 120 µm und weniger.

Mit den vorgeschlagenen Mitteln kann der thermische Gradient im Verbindungsbereich 26 vergleichmäßigt werden, wodurch die möglicherweise schädlichen Materialspannungen reduziert werden können. Weiterhin kann die unterschiedliche Beschichtungsdicke auch einen auf Einfluss die Eigenschwingungs-Eigenschaft der Turbinenschaufel haben.

Insgesamt wird mit der Erfindung eine Turbinenschaufel 12 angegeben, deren Schaufelwände 14, 16 in Abschnitte mit lokal angepassten Materialtemperaturen eingeteilt werden können. Die kühleren Materialtemperaturen der Schaufelwände 14, 16 befinden sich an den Stellen, an denen die Stützrippen 24 in die Schaufelwände 14, 16 übergehen. Die Bereiche mit höheren Materialtemperaturen der Schaufelwände 14, 16 sind an den Positionen, an denen im Innern der Schaufelwände 14, 16 Hohlräume 31 angeordnet sind. Erfindungsgemäß wird dies durch eine Beschichtung 32, insbesondere durch eine keramische Wärmedämmschicht mit unterschiedlichen Schichtdicken E, F erreicht, welche die unterschiedlichen Materialtemperaturen der Schaufelwände 14, 16 zulassen. Insbesondere derjenige Bereich B der dem Arbeitsmedium zugewandten Oberfläche 30 der Schaufelwand 14, 16, welcher einer in Inneren 22 angeformten Rippen 24 gegenüberliegt, weist eine dickere Wärmedämmschicht auf als derjenige Bereich A der Oberfläche 30 der Schaufelwand 4, 16, welche durch ein in den Hohlräumen 31 strömbares Kühlmittel kühlbar ist. Dies führt zu einer Vergleichmäßigung der Materialtemperatur in den Verbindungsbereichen 26 und entlang der Schaufelwand von Vorderkante 18 zu Hinterkante 20, was sich lebensverlängernd auf die Turbinenschaufel 12 auswirkt.

## Patentansprüche

1. Turbinenschaufel (12) für eine stationäre, axial durchströmte Gasturbine,
mit einem von einer saugseitigen Schaufelwand (14) und einer druckseitigen Schaufelwand (16) gebildeten, hohlen Tragflügelprofil (10),
dessen Schaufelwände (14, 16) an ihrer äußeren, einem Arbeitsmedium zuwendbaren Oberfläche (30) eine Beschichtung (32) aufweisen,
mit mindestens einer im Inneren (22) angeordneten, die druckseitige Schaufelwand (16) mit der saugseitigen Schaufelwand (14) verbindende Stützrippe (24), die jeweils in einem Verbindungsbereich (26) in die Schaufelwand (14, 16) übergeht,
**dadurch gekennzeichnet, dass**
die Beschichtung (32) in mindestens einem der Bereiche der äußeren Oberfläche (30), die jedem der Verbindungsbereiche (26) gegenüberliegt, eine größere Schichtdicke aufweist als die Bereiche der äußeren Oberfläche (30) der Schaufelwände (14, 16), welche im Inneren (22) einen Hohlraum (31) begrenzen.

2. Turbinenschaufel (12) nach Anspruch 1,
bei der im Inneren (22) ein Kühlmittel strömbar ist.

3. Turbinenschaufel (12) nach Anspruch 1 oder 2,
bei der das Tragflügelprofil (10) von einem Grundkörper (40) gebildet ist, auf dem die Beschichtung (32) aufgebracht ist, und
bei der im Grundkörper (40) in den Bereichen, in denen die Beschichtung (32) die größere Schichtdicke aufweist, Vertiefungen (42) vorgesehen sind.

4. Turbinenschaufel (12) nach Anspruch 3,
wobei die Vertiefungen (42) ein Tiefenmaß aufweisen, welches annähernd der Differenz zwischen der dickeren und der dünneren Beschichtung (32) entspricht, um eine besonders aerodynamische vom Arbeitsmedium umströmbare Oberfläche der Beschichtung (32) zu erzielen.

5. Turbinenschaufel (12) nach einem der vorangehenden Ansprüche,
bei der sich die saugseitige Schaufelwand (14) und die druckseitige Schaufelwand (16) im Bereich einer Hinterkante (20) vereinigen und die Beschichtung (32) auf mindestens einem dieser Bereiche der Schaufelwände (14, 16) dicker ist als im davor unmittelbar stromaufliegenden Bereich.

6. Turbinenschaufel (12) nach einem der vorangehenden Ansprüche,
bei der die im Querschnitt dickere Beschichtung (32) um mindestens um den Faktor 1,1, insbesondere um den Faktor 1,2, dicker ist als die darauf bezogene dünnere Beschichtung (32).

## Claims

1. Turbine blade (12) for a stationary gas turbine subjected to axial through-flow,
with a hollow airfoil section (10) which is formed by a blade wall (14) on the suction side and a blade wall (16) on the pressure side,
the blade walls (14, 16) of which airfoil section have a coating (32) on their outer surface (30) which faces a working medium,
with at least one support rib (24), which is arranged inside (22), connects the blade wall (16) on the pressure side to the blade wall (14) on the suction side, and, in a connecting region (26), merges into the blade wall (14, 16) in each case,
**characterized in that**
the coating (32), in at least one of the regions of the outer surface (30) which lies opposite each of the connecting regions (26), has a greater layer thickness than the regions of the outer surface (30) of the blade walls (14, 16) which define a cavity (31) inside (22).

2. Turbine blade (12) according to Claim 1,
in which a cooling medium is flowable inside (22).

3. Turbine blade (12) according to Claim 1 or 2,
in which the airfoil section (10) is formed by a basic body (40), to which the coating (32) is applied, and
in which recesses (42) are provided in the basic body (40) in the regions in which the coating (32) has the greater layer thickness.

4. Turbine blade (12) according to Claim 3,
wherein the recesses (42) have a depth dimension which approximately corresponds to the difference between the thicker and the thinner coating (32), in order to achieve an especially aerodynamic surface of the coating (32) which is exposed to flow of the working medium.

5. Turbine blade (12) according to one of the preceding claims,
in which the blade wall (14) on the suction side and the blade wall (16) on the pressure side meet in the region of a trailing edge (20), and the coating (32) on at least one of these regions of the blade walls (14, 16) is thicker than in the region which lies upstream directly in front of it.

6. Turbine blade (12) according to one of the preceding claims,
in which the coating (32) which is thicker in cross section is thicker than the coating (32) which is thinner in relation to it by at least the factor of 1.1, especially by the factor of 1.2.

## Revendications

1. Aube (12) de turbine pour une turbine à gaz fixe, parcourue axialement,
comprenant un profilé (10) d'aile portante creux, formé d'une paroi (14) d'aube côté extrados et d'une paroi (16) d'aube côté intrados,
dont les parois (14, 16) d'aube ont un revêtement sur leurs surfaces (30) extérieures pouvant être tournées vers le fluide de travail,
comprenant au moins une nervure (24) d'appui, qui est disposée à l'intérieur (22), qui relie la paroi (16) d'aube du côté intrados à la paroi (14) d'aube du côté extrados et qui se transforme respectivement en la paroi (14, 16) d'aube dans la zone (26) de liaison, **caractérisée en ce que**
le revêtement (32), a au moins dans l'une des zones des surfaces (30) extérieures opposée à celle des zones (26) de liaison, une épaisseur de couche plus grande que les zones des surfaces (30) extérieures des parois (14, 16) d'aube, qui délimitent une cavité (31) à l'intérieur (22).

2. Aube (12) de turbine suivant la revendication 1, dans laquelle un fluide de refroidissement peut s'écouler à l'intérieur (22).

3. Aube (12) de turbine suivant la revendication 1 ou 2, dans laquelle le profilé (10) d'aile portante est formé par une pièce (40) de base sur laquelle le revêtement (30) est déposé, et
dans laquelle il est prévu dans la pièce (40) de base des cavités (42) dans les zones dans lesquelles le revêtement (32) a l'épaisseur de couche la plus grande.

4. Aube (12) de turbine suivant la revendication 3, dans laquelle les cavités (42) ont une profondeur qui correspond à peu près à la différence entre le revêtement (32) le plus épais et le plus mince pour obtenir une surface de revêtement (22) pouvant être contournée d'une manière particulièrement aérodynamique par le fluide de travail.

5. Aube (12) de turbine suivant l'une des revendications précédentes, dans laquelle la paroi (14) d'aube côté extrados et la paroi (16) d'aube côté intrados se réunissent dans la zone d'un bord (20) arrière et le revêtement (32) est plus épais sur au moins l'une de ces zones des parois (14, 16) d'aube que dans la zone se trouvant immédiatement en amont.

6. Aube (12) de turbine suivant l'une des revendications précédentes, dans laquelle le revêtement (32) plus épais en section transversal est plus épais d'au moins le facteur 1,1, notamment du facteur 1,2, que le revêtement (32) plus mince qui s'y rapporte.
